# EUROPEAN PATENT SPECIFICATION

(11) **EP 4 213 378 B1**
(45) Date of publication and mention of the grant of the patent: **07.10.2026**
(21) Application number: 20952196.2
(22) Date of filing: 27.10.2020
(51) Int. Cl.: H02S 30/10, H02S 20/00

(54) **INSTALLATION STRUCTURE OF PHOTOVOLTAIC ASSEMBLY AND IMPLEMENTATION METHOD THEREFOR**
INSTALLATIONSSTRUKTUR EINER FOTOVOLTAISCHEN ANORDNUNG UND IMPLEMENTIERUNGSVERFAHREN DAFÜR
STRUCTURE D'INSTALLATION D'UN ENSEMBLE PHOTOVOLTAÏQUE ET SON PROCÉDÉ DE MISE EN OEUVRE

(30) Priority: 07.09.2020 CN 202010927669
(43) Date of publication of application: 19.07.2023
(73) Proprietor: Hengdian Group DMEGC Magnetics Co., Ltd., Dongyang, Zhejiang 322118 (CN)
(72) Inventor: LOU, Caoxin, Jinhua, Zhejiang 322118 (CN); HE, Yue, Jinhua, Zhejiang 322118 (CN); WANG, Tingting, Jinhua, Zhejiang 322118 (CN); LI, Chunhui, Jinhua, Zhejiang 322118 (CN); ZHAO, Lin, Jinhua, Zhejiang 322118 (CN); AI, Ruiyang, Jinhua, Zhejiang 322118 (CN)
(74) Representative: Dennemeyer & Associates S.A.
(86) International application number: PCT/CN2020/123938
(87) International publication number: WO 2022/047954

(56) References cited:
- EP-A2- 2 362 429
- WO-A1-2012/043457
- WO-A1-2013/127330
- WO-A1-2014/050078
- CN-A- 102 201 466
- CN-A- 102 201 466
- CN-U- 212 324 050
- CN-U- 212 324 050
- US-A1- 2012 298 817
- US-A1- 2016 087 578
- US-B1- 7 592 537

## Description

### Field of the Invention

The present disclosure relates to the technical field of photovoltaic module installation, and particularly to an installation structure for photovoltaic modules and implementation method thereof.

### Background of the Invention

With vigorous development of China's photovoltaic industry, the power generation efficiency of crystalline silicon photovoltaic modules has increased from 10% at the beginning of the twenty-first century to the current state with a maximum efficiency being > 25%. At the same time, the manufacturing costs have also been declining. At present, crystalline silicon photovoltaic products have decreased by more than 90% in costs as compared to a decade ago. With the improvements of processes and technologies as well as the cost decline, the end-use market is also booming, and photovoltaic products are gradually changing from industrial equipment to civilian products. Building Integrated Photovoltaics (BIPV) is a technology of applying solar power generation (photovoltaic) products to buildings, making full use of the spatial structure of buildings, sheds, and greenhouses, and adding the power generation function on the basis of conventional shading, temperature control, and rain shelter. BIPV has thus become a hot spot in future building and photovoltaic technology market.

In the prior art, installation structures for photovoltaic modules have some defects in actual use, for example:
1, the press block is generally pressed above the frame, and the press block protrudes on the frame which makes the appearance incongruous; in addition, when the sun enters obliquely in the morning and evening, the edge of the press block will be shaded, which affects the working efficiency of the photovoltaic module;
2, the spacing between frames often exceeds 25 mm due to the press block, which is a waste for limited laying space;
3, the press block has a long moment due to the frame structure, and the contact area is limited, thus leading to poor fixation effect; under extreme weather conditions such as typhoon, the photovoltaic module will fall off due to the unstable fixation of the press block, resulting in loss and even safety issues; and
4, since the press block is pressed above the frame, the frame will also be stressed after the bolt is tightened, which is likely to cause glass burst of the photovoltaic module. CN102201466 discloses a prior art installation structure.

### Summary of the Invention

An object of the present disclosure is to provide an installation structure for photovoltaic modules to solve the problems set forth in the background above. The installation structure for photovoltaic modules provided by the present disclosure is characterized by good installation stability and convenience for installation.

Another object of the present disclosure is to provide an implementation method of an installation structure for photovoltaic modules.

In order to achieve the above objects, the present disclosure provides the following technical solution: an installation structure for photovoltaic modules includes a frame, where the frame includes a post, an insert block is arranged at one side of a lower end of the post, a clamping block is arranged above the post at the same side as the insert block, a clamping slot is arranged below the clamping block, a groove is arranged above the insert block, the frame is positioned above an installation surface, a press block is arranged above the insert block and also positioned above the installation surface, the press block abuts against the insert block, the press block is connected to the installation surface via a bolt, and a side edge of a photovoltaic module body is embedded into the clamping slot.

Further in the disclosure, a connection chamber is arranged on the post for connection.

Further in the disclosure, dense first teeth are arranged on the insert block for increasing friction.

Further in the disclosure, a support plate is arranged at the other side of the lower end of the post, and a second through hole is positioned through the support plate.

Further in the disclosure, a reinforcing rib is connected to the post for increasing strength, and the reinforcing rib has a linear, arc-shaped, or cross-shaped structure.

Further in the disclosure, an arc is arranged below an opening of the clamping slot.

Further in the disclosure, the press block has an L-shaped structure, dense second teeth are arranged on upper and lower surfaces of two ends of the press block, separately, and a first through hole is centered at the press block.

Further in the disclosure, a rubber ring is arranged below the press block at a position corresponding to the first through hole.

Further in the disclosure, the implementation method of an installation structure for photovoltaic modules includes the following steps:
(i), positioning a convex end of the press block downwards when performing fixation of a single frame;
(ii), positioning the convex end of the press block upwards when performing fixation between two frames;
(iii), during installation, arranging the rubber ring at an installation position, positioning the press block above the rubber ring, and then connecting the press block to the installation surface with a bolt, where the bolt is not tightened;
(iv), inserting the insert block of the frame under the press block, and then tightening the bolt; and
(v), clamping an edge of the photovoltaic module body into the clamping slot of the frame, and then installing another frame to the other edge of the photovoltaic module body to complete the installation of the photovoltaic module body.

Further in the disclosure, in the implementation method of an installation structure for photovoltaic modules, a connection chamber is arranged on the post for connection; dense first teeth are arranged on the insert block for increasing friction; a support plate is arranged at the other side of the lower end of the post, and a second through hole is positioned through the support plate; a reinforcing rib is connected to the post for increasing strength, and the reinforcing rib has a linear, arc-shaped, or cross-shaped structure; an arc is arranged below an opening of the clamping slot; the press block has an L-shaped structure, dense second teeth are arranged on upper and lower surfaces of two ends of the press block, separately, and a first through hole is centered at the press block.

The present disclosure has following advantageous effects as compared to the prior art:
1, in the present disclosure, the press block is applicable to fixation of a single frame or two frames and has good adaptability;
2, in the present disclosure, through connection with the lower end of the frame so as not to be affected by thickness of the frame, the press block is suitable for installation of photovoltaic module bodies with various thicknesses of the frame, thus reducing the types required of press blocks; in addition, pressing above the photovoltaic module body can be avoided, so that glass burst of the photovoltaic module body due to being pressed too tightly during installation can be avoided;
3, in the present disclosure, the press block is embedded into the frame after installation, resulting in an appearance that is more desirable, and the working efficiency of the photovoltaic module body can be prevented from being reduced due to shading;
4, in the present disclosure, since the press block is embedded into the frame after installation, the installation spacing between frames can be reduced, thus improving utilization of space and further facilitating subsequent waterproofing or sealing treatment;
5, in the present disclosure, the press block is increased in friction with the frame through the second teeth, thereby increasing the stability of installation;
6, in the present disclosure, a rubber ring is arranged below the press block at a position corresponding to the first through hole during installation, and the rubber ring can lift up the press block before the bolt is tightened so as to facilitate the insertion of the insert block of the frame under the press block, and since the rubber ring has elasticity, the arrangement of the rubber ring does not affect the fixation effect of the press block;
7, the present disclosure achieves installation embedded in a building structure through the insert block and the groove;
8, the present disclosure arranges first teeth on the insert block, which can increase friction of the connection so as to ensure the stability of the connection;
9, the present disclosure enables replacement of glass by photovoltaic module bodies to be embedded in a building structure, which can improve the aesthetics of the building structure and has good practicality;
10, in the present disclosure, a connection chamber is arranged on the post for connection, and the connection chamber is configured for an angle corner code connection between two frames, thereby enhancing the connection strength between the frames;
11, in the present disclosure, a support plate is arranged at the other side of the lower end of the post, and a second through hole is positioned through the support plate, the support plate is configured for improving the support performance of the frame, and the second through hole can be remained for subsequent arrangement and treatment, such as functioning as a grounding hole; and
12, in the present disclosure, a reinforcing rib is connected to the post for increasing strength, and the reinforcing rib is configured for increasing the mechanical strength of the frame.

### Brief Description of the Drawings

Fig. 1 is a schematic diagram showing connection structure of two frames according to the present disclosure;
Fig. 2 is a schematic diagram showing connection structure of a single frame according to the present disclosure;
Fig. 3 is a schematic diagram showing structure of a press block according to the present disclosure;
Figs. 4-6 are schematic diagrams showing structures of frames according to the present disclosure;
Figs. 7-8 are schematic diagrams showing installation structure of a press block in Embodiment 7 according to the present disclosure; and
Figs. 9-12 are schematic diagrams showing other forms of structures of frames in Embodiment 8 according to the present disclosure.

In the drawings: 1, installation surface; 2, frame; 21, post; 22, connection chamber; 23, clamping slot; 24, clamping block; 25, groove; 26, insert block; 27, first teeth; 28, reinforcing rib; 29, support plate; 3, photovoltaic module body; 4, bolt; 5, press block; 51, first through hole; 52, second teeth; 6, rubber ring.

### Detailed Description of the Embodiments

The technical solution in the embodiments of the present disclosure will now be described more clearly and fully hereinafter with reference to the accompanying drawings in the embodiments of the present disclosure. It is obvious that the embodiments described are only a few, but not all embodiments of the present disclosure. Based on the embodiments of the present disclosure, all other embodiments obtained by a person of ordinary skill in the art without inventive effort shall fall within the protection scope of the present disclosure.

### Embodiment 1

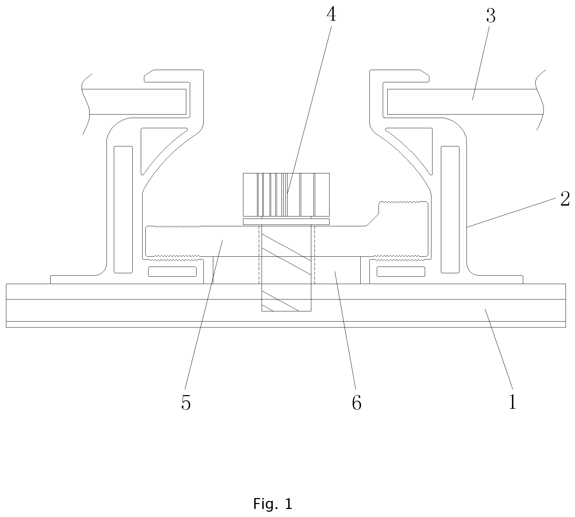

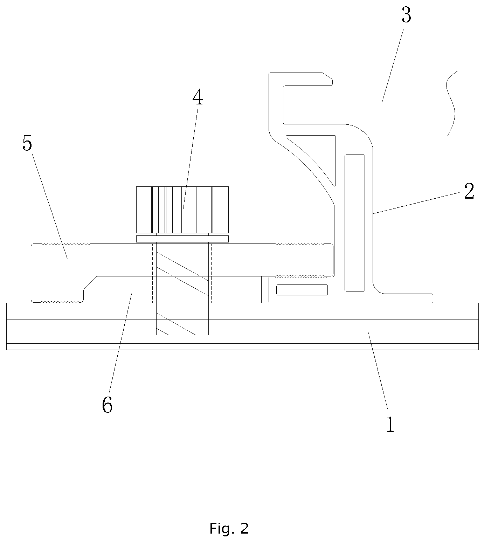

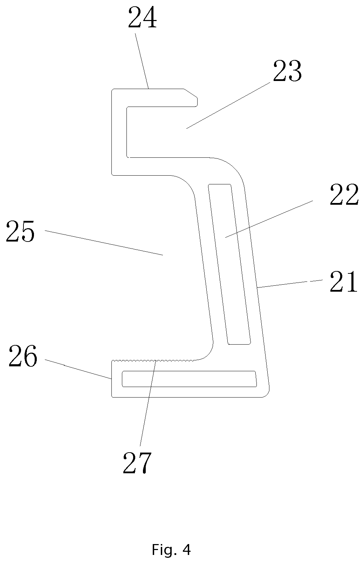

With reference to Figs 1-6, the present disclosure provides the following technical solution: an installation structure for photovoltaic modules includes a frame 2, where the frame 2 includes a post 21, an insert block 26 is arranged at one side of a lower end of the post 21, a clamping block 24 is arranged above the post 21 at the same side as the insert block 26, a clamping slot 23 is arranged below the clamping block 24, a groove 25 is arranged above the insert block 26, the frame 2 is positioned above an installation surface 1, a press block 5 is arranged above the insert block 26 and also positioned above the installation surface 1, the press block 5 abuts against the insert block 26, the press block 5 is connected to the installation surface 1 via a bolt 4, and a side edge of a photovoltaic module body 3 is embedded into the clamping slot 23.

Further, an arc is arranged below an opening of the clamping slot 23.

By adopting the above technical solution, the arc can avoid flexure of the photovoltaic module body 3 when the photovoltaic module body 3 is bent under a high load.

Further, the press block 5 has an L-shaped structure, dense second teeth 52 are arranged on upper and lower surfaces of two ends of the press block 5, separately, and a first through hole 51 is centered at the press block 5.

By adopting the above technical solution, the friction with the frame 2 is increased through the second teeth 52, thereby increasing the stability of installation; the first through hole 51 is configured for the passage of the bolt 4.

### Embodiment 2

The embodiment differs from Embodiment 1 in that a connection chamber 22 is further arranged on the post 21 for connection.

By adopting the above technical solution, the connection chamber 22 is configured for an angle corner code connection between two frames 2, thereby enhancing the connection strength between the frames 2.

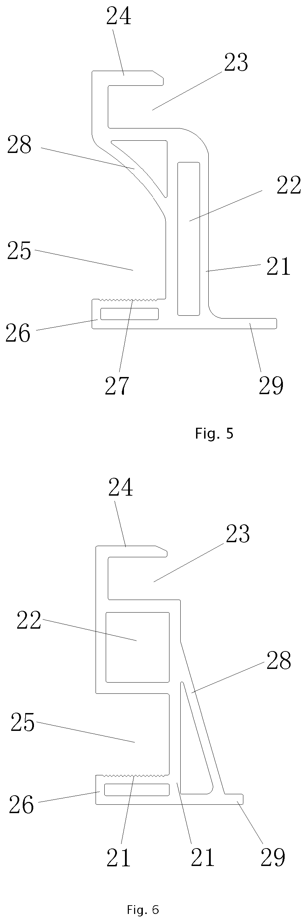

As shown in Fig. 5 or 6, the connection chamber 22 may be arranged at one side of the groove 25 or may be arranged above the groove 25.

### Embodiment 3

The embodiment differs from Embodiment 1 in that dense first teeth 27 are further arranged on the insert block 26 for increasing friction.

By adopting the above technical solution, the first teeth 27 are configured for increasing the friction after nesting with a building structure or the friction with the press block 5. In the embodiment, the first teeth 27 are arranged on the upper surface of the insert block 26, and the first teeth 27 may also be arranged on the lower surface of the insert block 26 or other corresponding positions.

### Embodiment 4

The embodiment differs from Embodiment 1 in that a support plate 29 is further arranged at the other side of the lower end of the post 21, and a second through hole is positioned through the support plate 29.

By adopting the above technical solution, the support plate 29 is configured for improving the support performance of the frame, and the second through hole can be remained for subsequent arrangement and treatment, such as functioning as a grounding hole.

### Embodiment 5

The embodiment differs from Embodiment 1 in that a reinforcing rib 28 is further connected to the post 21 for increasing strength, and the reinforcing rib 28 has a linear, arc-shaped, or cross-shaped structure.

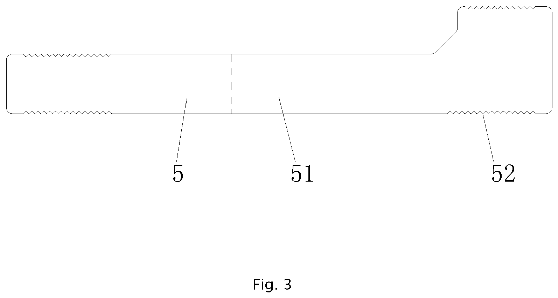

By adopting the above technical solution, the reinforcing rib 28 is configured for increasing the mechanical strength of the frame 2; as shown in Fig. 3, the reinforcing rib 28 may not be arranged in an environment with low mechanical load requirements; as shown in Fig. 5, the reinforcing rib 28 can be arranged above the groove 25, and the reinforcing rib 28 has an arc-shaped structure; as shown in Fig. 6, the reinforcing rib 28 may be arranged at a side of the post 21 away from the groove 25, and the reinforcing rib 28 has a linear structure.

### Embodiment 6

The embodiment differs from Embodiment 1 in that a rubber ring 6 is further arranged below the press block 5 at a position corresponding to the first through hole 51.

By adopting the above technical solution, the rubber ring 6 can lift up the press block 5 before the bolt 4 is tightened, so as to facilitate the insertion of the insert block 26 of the frame 2 under the press block 5, and since the rubber ring 6 has elasticity, the arrangement of the rubber ring 6 does not affect the fixation effect of the press block 5;

### Embodiment 7

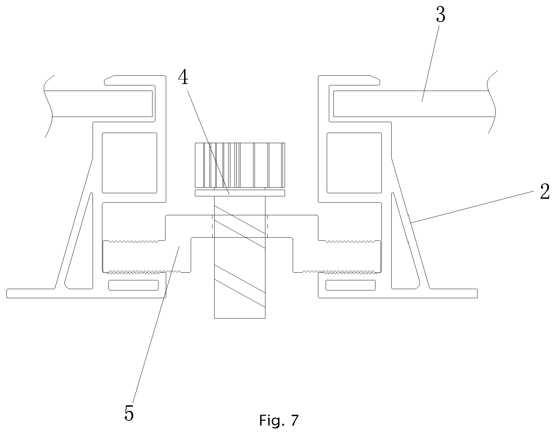

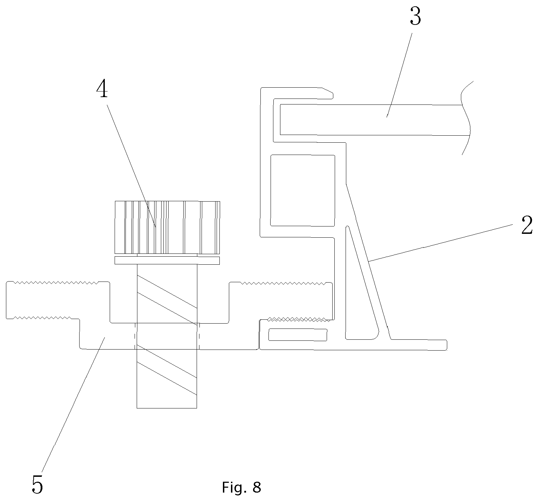

With reference to Figs. 7-8, the embodiment differs from Embodiment 1 in that the press block 5 may also be configured as shown in Figs. 7-8, and installed in the same manner and with the same effect as the L-shaped press block 5 in Embodiment 1.

### Embodiment 8

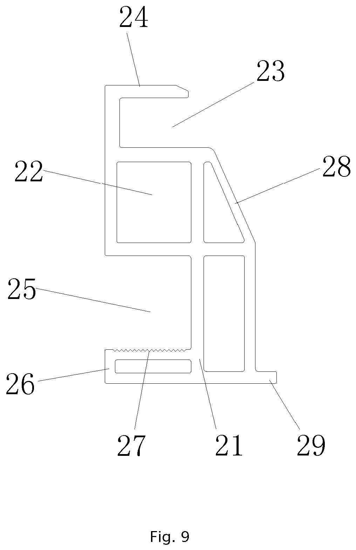

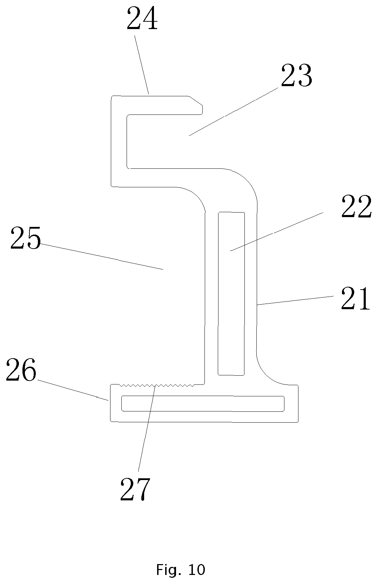

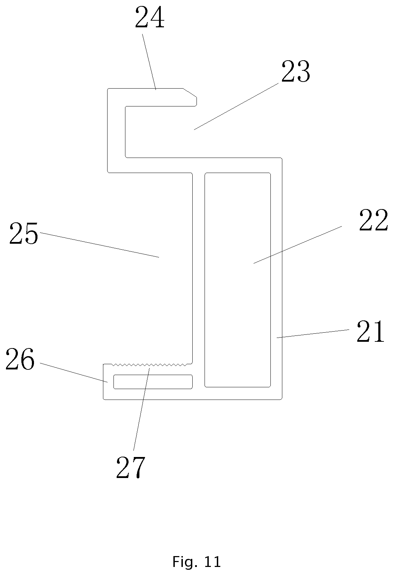

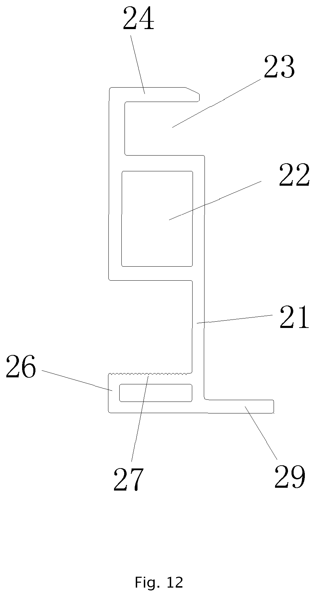

With reference to Figs. 9-12, the embodiment differs from Embodiment 1 in that the frame 2 may also be configured as shown in Figs. 9-12.

### Embodiment 9

The embodiment differs from Embodiment 1 in that the length of the clamping block 24 is shorter as compared to lengths of clamping blocks in the prior art.

By adopting the above technical solution, it is possible to reduce the insertion depth of the photovoltaic module body 3 into the clamping slot 23, thereby avoiding that the clamping slot 23 is so deep that shades the battery chips on the upper surface of the photovoltaic module body 3 or the faceted metal frame contacts with the battery chips which causes the battery chips to break.

Further, the implementation method of an installation structure for photovoltaic modules includes the following steps.

At (i), a convex end of the press block 5 is positioned downwards when fixation of a single frame 2 is performed.

At (ii), the convex end of the press block 5 is positioned upwards when fixation between two frames 2 is performed.

At (iii), during installation, the rubber ring 6 is arranged at an installation position, the press block 5 is positioned above the rubber ring 6, and then the press block 5 is connected to the installation surface 1 with a bolt 4, where the bolt 4 is not tightened.

At (iv), the insert block 26 of the frame 2 is inserted under the press block 5, and then the bolt 4 is tightened.

At (v), an edge of the photovoltaic module body 3 is clamped into the clamping slot 23 of the frame 2, and then another frame 2 is installed to the other edge of the photovoltaic module body 3 to complete the installation of the photovoltaic module body 3.

In summary, in the present disclosure, the press block 5 is applicable to fixation of a single frame 2 or two frames 2 and has good adaptability; in the present disclosure, through connection with the lower end of the frame 2 so as not to be affected by thickness of the frame 2, the press block 5 is suitable for installation of photovoltaic module bodies 3 with various thicknesses of the frame 2, thus reducing the types required of press blocks 5; in addition, pressing above the photovoltaic module body 3 can be avoided, so that glass burst of the photovoltaic module body 3 due to being pressed too tightly during installation can be avoided; in the present disclosure, the press block 5 is embedded into the frame 2 after installation, resulting in an appearance that is more desirable, and the working efficiency of the photovoltaic module body 3 can be prevented from being reduced due to shading; in the present disclosure, since the press block 5 is embedded into the frame 2 after installation, the installation spacing between frames 2 can be reduced, thus improving utilization of space and further facilitating subsequent waterproofing or sealing treatment; in the present disclosure, the press block 5 is increased in friction with the frame 2 through the second teeth 52, thereby increasing the stability of installation; in the present disclosure, a rubber ring 6 is arranged below the press block 5 at a position corresponding to the first through hole 51 during installation, and the rubber ring 6 can lift up the press block 5 before the bolt 4 is tightened, so as to facilitate the insertion of the insert block 26 of the frame 2 under the press block 5, and since the rubber ring 6 has elasticity, the arrangement of the rubber ring 6 does not affect the fixation effect of the press block 5; the present disclosure achieves installation embedded in a building structure through the insert block 26 and the groove 25; the present disclosure arranges first teeth 27 on the insert block 26, which can increase friction of the connection so as to ensure the stability of the connection; the present disclosure enables replacement of glass by photovoltaic module bodies 3 to be embedded in a building structure, which can improve the aesthetics of the building structure and has good practicality; in the present disclosure, a connection chamber 22 is arranged on the post 21 for connection, and the connection chamber 22 is configured for an angle corner code connection between two frames 2, thereby enhancing the connection strength between the frames 2; in the present disclosure, a support plate 29 is arranged at the other side of the lower end of the post 21, and a second through hole is positioned through the support plate 29, the support plate 29 is configured for improving the support performance of the frame 2, and the second through hole can be remained for subsequent arrangement and treatment, such as functioning as a grounding hole; and in the present disclosure, a reinforcing rib 28 is connected to the post 21 for increasing strength, and the reinforcing rib 28 is configured for increasing the mechanical strength of the frame 2.

While embodiments of the present disclosure have been shown and described, it will be understood by those skilled in the art that various changes, modifications, substitutions, and alterations may be made to these embodiments without departing from the principles of the present disclosure. The scope of the invention is set out out in the appended claims.

## Claims

1. An installation structure for photovoltaic modules, comprising a frame (2), wherein the frame (2) comprises a post (21), an insert block (26) is arranged at one side of a lower end of the post (21), a clamping block (24) is arranged above the post (21) at the same side as the insert block (26), a clamping slot (23) is arranged below the clamping block (24), a groove (25) is arranged above the insert block (26), the frame (2) is positioned above an installation surface (1), a press block (5) is arranged above the insert block (26) and also positioned above the installation surface (1), the press block (5) abuts against the insert block (26), the press block (5) is connected to the installation surface (1) via a bolt (4), and a side edge of a photovoltaic module body (3) is embedded into the clamping slot (23), **characterized in that**
dense first teeth (27) are arranged on the insert block (26) for increasing friction, the press block (5) has an L-shaped structure, dense second teeth (52) are arranged on upper and lower surfaces of two ends of the press block (5), separately, and a first through hole (51) is centered at the press block (5);
the press block (5) is adapted to fix a single frame (2) or two frames (2);
when the press block (5) is configured to fix the single frame (2), a convex end of the press block (5) is positioned downwards; and
when the press block (5) is configured to fix the two frames (2), the convex end of the press block (5) is positioned upwards.

2. The installation structure for photovoltaic modules according to claim 1, wherein a connection chamber (22) is arranged on the post (21) for connection.

3. The installation structure for photovoltaic modules according to claim 1, wherein a support plate (29) is arranged at the other side of the lower end of the post (21), and a second through hole is positioned through the support plate (29).

4. The installation structure for photovoltaic modules according to claim 1, wherein a reinforcing rib (28) is connected to the post (21) for increasing strength, and the reinforcing rib (28) has a linear, arc-shaped, or cross-shaped structure.

5. The installation structure for photovoltaic modules according to claim 1, wherein an arc is arranged below an opening of the clamping slot (23).

6. The installation structure for photovoltaic modules according to claim 1, wherein a rubber ring (6) is arranged below the press block (5) at a position corresponding to the first through hole (51).

7. An implementation method of the installation structure for photovoltaic modules according to any one of claims 1-6, comprising the following steps:
(i), positioning a convex end of the press block (5) downwards when performing fixation of a single frame (2);
(ii), positioning the convex end of the press block (5) upwards when performing fixation between two frames (2);
(iii), during installation, arranging the rubber ring (6) at an installation position, positioning the press block (5) above a rubber ring (6), and then connecting the press block (5) to the installation surface (1) with a bolt (4), wherein the bolt (4) is not tightened;
(iv), inserting the insert block (26) of the frame (2) under the press block (5), and then tightening the bolt (4); and
(v), clamping an edge of the photovoltaic module body (3) into the clamping slot (23) of the frame (2), and then installing another frame (2) to the other edge of the photovoltaic module body (3) to complete the installation of the photovoltaic module body (3).

8. The implementation method of the installation structure for photovoltaic modules according to claim 7, wherein a connection chamber (22) is arranged on the post (21) for connection; dense first teeth (27) are arranged on the insert block (26) for increasing friction; a support plate (29) is arranged at the other side of the lower end of the post (21), and a second through hole is positioned through the support plate (29); a reinforcing rib (28) is connected to the post (21) for increasing strength, and the reinforcing rib (28) has a linear, arc-shaped, or cross-shaped structure; an arc is arranged below an opening of the clamping slot (23).

## Patentansprüche

1. Einbaustruktur für Photovoltaikmodule, umfassend einen Rahmen (2), wobei der Rahmen (2) eine Stange (21) umfasst, ein Einsetzblock (26) auf einer Seite eines unteren Endes der Stange (21) angeordnet ist, ein Klemmblock (24) über der Stange (21) auf derselben Seite wie der Einsetzblock (26) angeordnet ist, ein Klemmschlitz (23) unterhalb des Klemmblocks (24) angeordnet ist, eine Nut (25) über dem Einsetzblock (26) angeordnet ist, der Rahmen (2) über einer Einbaufläche (1) positioniert ist, ein Einpressblock (5) über dem Einsetzblock (26) angeordnet und auch über der Einbaufläche (1) positioniert ist, der Einpressblock (5) an dem Einsetzblock (26) anliegt, der Einpressblock (5) über eine Schraube (4) mit der Einbaufläche (1) verbunden ist und eine Seitenkante eines Photovoltaikmodulkörpers (3) in dem Klemmschlitz (23) eingebettet ist, **gekennzeichnet dadurch, dass**
dichte erste Zähne (27) an dem Einsetzblock (26) zum Erhöhen von Reibung angeordnet sind, der Einpressblock (5) eine L-förmige Struktur aufweist, dichte zweite Zähne (52) auf oberen und unteren Flächen von zwei Enden des Einpressblocks (5) getrennt angeordnet sind und ein erstes Durchloch (51) an dem Einpressblock (5) zentriert ist;
der Einpressblock (5) dazu angepasst ist, einen einzelnen Rahmen (2) oder zwei Rahmen (2) zu fixieren;
wenn der Einpressblock (5) dazu konfiguriert ist, den einzelnen Rahmen (2) zu fixieren, ein konvexes Ende des Einpressblocks (5) nach unten gerichtet positioniert ist; und
wenn der Einpressblock (5) dazu konfiguriert ist, die zwei Rahmen (2) zu fixieren, das konvexe Ende des Einpressblocks (5) nach oben gerichtet positioniert ist.

2. Einbaustruktur für Photovoltaikmodule nach Anspruch 1, wobei eine Verbindungskammer (22) auf der Stange (21) zur Verbindung angeordnet ist.

3. Einbaustruktur für Photovoltaikmodule nach Anspruch 1, wobei eine Trageplatte (29) auf der anderen Seite des unteren Endes der Stange (21) angeordnet ist, und ein zweites Durchloch durch die Trageplatte (29) positioniert ist.

4. Einbaustruktur für Photovoltaikmodule nach Anspruch 1, wobei zum Erhöhen der Stärke eine verstärkende Rippe (28) mit der Stange (21) verbunden ist und die verstärkende Rippe (28) eine lineare, bogenförmige oder kreuzförmige Struktur aufweist.

5. Einbaustruktur für Photovoltaikmodule nach Anspruch 1, wobei ein Bogen unterhalb einer Öffnung des Klemmschlitzes (23) angeordnet ist.

6. Einbaustruktur für Photovoltaikmodule nach Anspruch 1, wobei ein Gummiring (6) unterhalb des Einpressblocks (5) an einer Position angeordnet ist, die dem ersten Durchloch (51) entspricht.

7. Implementationsverfahren der Einbaustruktur für Photovoltaikmodule nach einem der Ansprüche 1 bis 6, die folgenden Schritte umfassend:
(i) Positionieren eines konvexen Endes des Einpressblocks (5) nach unten gerichtet, wenn eine Fixierung eines einzelnen Rahmens (2) durchgeführt wird;
(ii) Positionieren des konvexen Endes des Einpressblocks (5) nach oben gerichtet, wenn eine Fixierung zwischen zwei Rahmens (2) durchgeführt wird;
(iii) während des Einbaus, Anordnen des Gummirings (6) an einer Einbauposition, Positionieren des Einpressblocks (5) über einem Gummiring (6) und dann Verbinden des Einpressblocks (5) mit der Einbaufläche (1) mit einer Schraube (4), wobei die Schraube (4) nicht angezogen wird;
(iv) Einsetzen des Einsetzblocks (26) des Rahmens (2) unter dem Einpressblock (5) und dann Anziehen der Schraube (4); und
(v) Klemmen einer Kante des Photovoltaikmodulkörpers (3) in den Klemmschlitz (23) des Rahmens (2) und dann Einbauen eines anderen Rahmens (2) an der anderen Kante des Photovoltaikmodulkörpers (3), um den Einbau des Photovoltaikmodulkörpers (3) abzuschließen.

8. Implementationsverfahren der Einbaustruktur für Photovoltaikmodule nach Anspruch 7, wobei eine Verbindungskammer (22) an der Stange (21) zur Verbindung angeordnet ist; dichte erste Zähne (27) an dem Einsetzblock (26) zum Erhöhen von Reibung angeordnet sind; eine Trageplatte (29) auf der anderen Seite des unteren Endes der Stange (21) angeordnet ist und ein zweites Durchloch durch die Trageplatte (29) positioniert ist; eine verstärkende Rippe (28) mit der Stange (21) zum Erhöhen der Stärke verbunden ist und die verstärkende Rippe (28) eine lineare, bogenförmige oder kreuzförmige Struktur aufweist; ein Bogen unterhalb einer Öffnung des Klemmschlitzes (23) angeordnet ist.

## Revendications

1. Structure d'installation pour modules photovoltaïques, comprenant un cadre (2), dans lequel le cadre (2) comprend un montant (21), un bloc d'insertion (26) est agencé au niveau d'un côté d'une extrémité inférieure du montant (21), un bloc de pincement (24) est agencé au-dessus du montant (21) au niveau du même côté que le bloc d'insertion (26), une encoche de pincement (23) est agencée en dessous du bloc de pincement (24), une rainure (25) est agencée au-dessus du bloc d'insertion (26), le cadre (2) est positionné au-dessus d'une surface d'installation (1), un bloc de pression (5) est agencé au-dessus du bloc d'insertion (26) et aussi positionné au-dessus de la surface d'installation (1), le bloc de pression (5) vient en butée contre le bloc d'insertion (26), le bloc de pression (5) est connecté à la surface d'installation (1) par l'intermédiaire d'un boulon (4), et un bord latéral d'un corps de module photovoltaïque (3) est encastré dans l'encoche de pincement (23), **caractérisée en ce que**
des premières dents denses (27) sont agencées sur le bloc d'insertion (26) pour augmenter le frottement, le bloc de pression (5) présente une structure en forme de L, des deuxièmes dents denses (52) sont agencées sur des surfaces supérieures et inférieures de deux extrémités du bloc de pression (5), séparément, et un premier trou traversant (51) est centré au niveau du bloc de pression (5) ;
le bloc de pression (5) est adapté pour fixer un cadre (2) unique ou deux cadres (2) ;
dans laquelle le bloc de pression (5) est configuré pour fixer un cadre (2) unique, une extrémité convexe du bloc de pression (5) est positionnée vers le bas ; et
dans laquelle le bloc de pression (5) est configuré pour fixer les deux cadres (2), l'extrémité convexe du bloc de pression (5) est positionnée vers le haut.

2. Structure d'installation pour modules photovoltaïques selon la revendication 1, dans laquelle une chambre de connexion (22) est agencée sur le montant (21) pour la connexion.

3. Structure d'installation pour modules photovoltaïques selon la revendication 1, dans laquelle une plaque de support (29) est agencée au niveau de l'autre côté de l'extrémité inférieure du montant (21), et un deuxième trou traversant est positionné à travers la plaque de support (29).

4. Structure d'installation pour modules photovoltaïques selon la revendication 1, dans laquelle une nervure de renforcement (28) est connectée au montant (21) pour augmenter la résistance, et la nervure de renforcement (28) présente une structure linéaire, en forme d'arc ou en forme de croix.

5. Structure d'installation pour modules photovoltaïques selon la revendication 1, dans laquelle un arc est agencé en dessous d'une ouverture de l'encoche de pincement (23).

6. Structure d'installation pour modules photovoltaïques selon la revendication 1, dans laquelle une bague en caoutchouc (6) est agencée en dessous du bloc de pression (5) au niveau d'une position correspondant au premier trou traversant (51).

7. Procédé de mise en œuvre de la structure d'installation pour modules photovoltaïques selon l'une quelconque des revendications 1 à 6, comprenant les étapes suivantes :
(i), le positionnement d'une extrémité convexe du bloc de pression (5) vers le bas lors de la réalisation de la fixation d'un cadre (2) unique ;
(ii), le positionnement de l'extrémité convexe du bloc de pression (5) vers le haut lors de la réalisation de la fixation entre deux cadres (2) ;
(iii), lors de l'installation, l'agencement de la bague en caoutchouc (6) au niveau d'une position d'installation, le positionnement du bloc de pression (5) au-dessus d'une bague en caoutchouc (6), et puis la connexion du bloc de pression (5) à la surface d'installation (1) avec un boulon (4), dans laquelle le boulon (4) n'est pas serré ;
(iv), l'insertion du bloc d'insertion (26) du cadre (2) sous le bloc de pression (5), et puis le serrage du boulon (4) ; et
(v), le pincement d'un bord du corps de module photovoltaïque (3) dans l'encoche de pincement (23) du cadre (2), et puis l'installation d'un autre cadre (2) sur l'autre bord du corps de module photovoltaïque (3) pour compléter l'installation du corps de module photovoltaïque (3).

8. Procédé de mise en œuvre de la structure d'installation pour modules photovoltaïques selon la revendication 7, dans lequel une chambre de connexion (22) est agencée sur le montant (21) pour la connexion ; des premières dents denses (27) sont agencées sur le bloc d'insertion (26) pour augmenter le frottement ; une plaque de support (29) est agencée au niveau de l'autre côté de l'extrémité inférieure du montant (21), et un deuxième trou traversant est positionné à travers la plaque de support (29) ; une nervure de renforcement (28) est connectée au montant (21) pour augmenter la résistance, et la nervure de renforcement (28) présente une structure linéaire, en forme d'arc ou en forme de croix ; un arc est agencé en dessous d'une ouverture de l'encoche de pincement (23).
